# EUROPÄISCHE PATENTSCHRIFT

(11) **EP 4 290 100 B1**
(45) Veröffentlichungstag und Bekanntmachung des Hinweises auf die Patenterteilung: **06.08.2025**
(21) Anmeldenummer: 23172523.5
(22) Anmeldetag: 10.05.2023
(51) Int. Cl.: F16H 61/16

(54) **ANORDNUNG ZUR FREIGABE EINES FAHRANTRIEBS EINES LANDWIRTSCHAFTLICHEN TRAKTORS**
ARRANGEMENT FOR RELEASING A DRIVE MECHANISM OF AN AGRICULTURAL TRACTOR
AGENCEMENT DE LIBÉRATION D'UN DISPOSITIF DE PROPULSION D'UN TRACTEUR AGRICOLE

(30) Priorität: 08.06.2022 DE 102022114360; 21.06.2022 DE 102022115416
(43) Veröffentlichungstag der Anmeldung: 13.12.2023
(73) Patentinhaber: Deere & Company, Moline, IL 61265 (US)
(72) Erfinder: UDVARI, THOMAS, 68163 Mannheim (DE)
(74) Vertreter: Dehnhardt, Florian Christopher

(56) Entgegenhaltungen:
- JP-A- 2001 280 481
- JP-A- 2011 122 689

## Beschreibung

Die Erfindung betrifft eine Anordnung zur Freigabe eines Fahrantriebs eines landwirtschaftlichen Traktors.

Die JP 2001 280481 A offenbart eine Anordnung zur Ausführung einer automatisierten Getriebefunktion in einem Fahrzeug.

Zur Erhöhung der Arbeitseffizienz sowie des Arbeitskomforts werden landwirtschaftliche Traktoren zunehmend mit Systemen zur Unterstützung des Fahrers ausgestattet. Hierzu gehören unter anderem auch Fahrerassistenzsysteme, die selbsttätig in einen Fahrantrieb des landwirtschaftlichen Traktors eingreifen, mit dem Ziel, zumindest solche Fahraufgaben automatisiert durchzuführen, die eine erhöhte Genauigkeit und damit Aufmerksamkeit des Fahrers erfordern. Beispielhaft sei hier das präzise Ausbringen von Saatgut mittels einer an dem landwirtschaftlichen Traktor angebrachten Reihensäeinheit erwähnt.

Der Fahrantrieb ist typischerweise Bestandteil eines Antriebsstrangs des landwirtschaftlichen Traktors und umfasst neben einem Dieselmotor (oder auch einem beliebigen anderen Motor) ein Getriebe, das wiederum mit wenigstens einer angetriebenen Achse sowie weiteren Aggregaten des landwirtschaftlichen Traktors in Verbindung steht.

Erfolgen die Eingriffe in den Fahrantrieb, so ist es zur Vermeidung von für den Fahrer überraschenden Fahrzeugreaktionen erforderlich, geeignete Gegenvorkehrungen zu treffen. Insofern ist es Aufgabe der vorliegenden Erfindung, eine Anordnung der eingangs genannten Art dahingehend anzugeben, dass diese den erhöhten Sicherheitsanforderungen beim Einsatz von in einen Fahrantrieb eingreifenden Fahrerassistenzsystemen Rechnung trägt.

Diese Aufgabe wird durch eine Anordnung zur Freigabe eines Fahrantriebs eines landwirtschaftlichen Traktors mit den Merkmalen des Patentanspruchs 1 gelöst.

Die Anordnung zur Freigabe eines Fahrantriebs eines landwirtschaftlichen Traktors umfasst eine Getriebesteuerung zum Einlegen einer Fahrstufe durch Ansteuerung wenigstens einer zugehörigen Kupplungseinrichtung sowie eine Überwachungseinrichtung, die das Einlegen der Fahrstufe seitens der Getriebesteuerung ausschließlich dann freigibt, wenn diese aufgrund des Betätigungszustands wenigstens eines Fahrbedienelements auf das Vorliegen eines entsprechenden Fahrerwunsches schließt.

Mit anderen Worten besteht die Anordnung aus zwei getrennten Steuerpfaden. Einem ersten Steuerpfad, der der eigentlichen Getriebebetätigung einschließlich der Ansteuerung der wenigstens einen Kupplungseinrichtung zum Einlegen der Fahrstufe dient, sowie einem zweiten Steuerpfad als Kontrollinstanz zur Feststellung, ob die Aufnahme der Fahrt mit der tatsächlichen Absicht des Fahrers übereinstimmt. Auf diese Weise ist sichergestellt, dass der Fahrer stets die Kontrolle über den landwirtschaftlichen Traktor behält und dieser sich nicht unvermittelt in Bewegung setzt. Dies ist gerade in Fällen von Belang, in denen die Fahrstufe auf Veranlassung eines in dem landwirtschaftlichen Traktor vorhandenen Fahrerassistenzsystems eingelegt werden soll.

Bei dem wenigstens einen Fahrbedienelement handelt es sich um einen zur Vorgabe einer Vorwärts- oder Rückwärtsfahrt vorgesehenen Fahrtrichtungshebel und/oder ein Kupplungspedal zur Betätigung der wenigstens einen Kupplungseinrichtung.

Derartige Fahrbedienelemente sind bei mit Schaltgetrieben ausgestatteten landwirtschaftlichen Traktoren üblicherweise vorhanden und erlauben einen eindeutigen Rückschluss dahingehend, ob der Fahrer des landwirtschaftlichen Traktors beabsichtigt, durch Auswahl der Fahrtrichtung über den Fahrtrichtungshebel sowie Loslassen des Kupplungspedals eine Vorwärts- bzw. Rückwärtsfahrt einzuleiten. Somit schließt die Überwachungseinrichtung auf das Vorliegen eines entsprechenden Fahrerwunsches, wenn der Fahrtrichtungshebel eine zur Durchführung einer Vorwärts- oder Rückwärtsfahrt vorgesehene Position einnimmt und/oder das Kupplungspedal unbetätigt ist. Sobald sich der Fahrtrichtungshebel in seiner Neutralposition befindet und/oder das Kupplungspedal betätigt ist, wird indes eine Ansteuerung der wenigstens einen Kupplungseinrichtung seitens der Getriebesteuerung unterbunden bzw. unterbrochen. Denn ein Losfahren des landwirtschaftlichen Traktors ist dann vom Fahrer ausdrücklich unerwünscht.

Typischerweise wird die Position des Fahrtrichtungshebels und/oder der Betätigungszustand des Kupplungspedals mittels wenigstens eines elektrischen Schaltelements erfasst und an die Überwachungseinrichtung übermittelt. Genauer gesagt ist jedem der beiden Fahrbedienelemente ein separates elektrisches Schaltelement zugeordnet, wobei dieses zur Erhöhung der Ausfallsicherheit zusätzlich redundant ausgeführt sein kann. Das elektrische Schaltelement ist beispielsweise als berührungsloser Sensor oder aber als elektromechanischer Schalter ausgebildet.

Die Überwachungseinrichtung kann hierbei eine energieeffiziente und verlässliche Halbleiterlogik zur Auswertung von mittels des wenigstens einen Schaltelements bereitgestellten Schaltzustandssignalen aufweisen. Die Halbleiterlogik ist entweder durch Programmierung eines FPGA-Bausteins oder aber eines Mikroprozessors als Bestandteil eines Getriebesteuergeräts realisiert.

Die erfindungsgemäße Anordnung zur Freigabe eines Fahrantriebs eines landwirtschaftlichen Traktors wird im Folgenden anhand der beigefügten Zeichnung näher beschrieben.

Hierbei zeigt die einzige Figur ein Ausführungsbeispiel der Anordnung in Form eines schematisch wiedergegebenen Blockschaltbilds.

Dargestellt ist ein Fahrantrieb 10, der Bestandteil eines Antriebsstrangs 12 eines (nicht abgebildeten) landwirtschaftlichen Traktors 14 ist und neben einem Dieselmotor 16 ein Schaltgetriebe 18 umfasst, das wiederum mit wenigstens einer angetriebenen Achse 20 sowie weiteren Aggregaten 22 des landwirtschaftlichen Traktors 14 in Verbindung steht.

Die in dem landwirtschaftlichen Traktor 14 untergebrachte Anordnung 24 weist eine Getriebesteuerung 26 auf, mittels derer sich eine Fahrstufe des von dem Dieselmotor 16 angetriebenen Schaltgetriebes 18 durch Ansteuerung wenigstens einer zugehörigen Kupplungseinrichtung 28 einlegen lässt. Bei der Fahrstufe handelt es sich um einen Vorwärts- oder Rückwärtsgang des landwirtschaftlichen Traktors 14. Die Ansteuerung der wenigstens einen Kupplungseinrichtung 28 erfolgt hierbei nach Maßgabe von Steuerbefehlen 30, die der Getriebesteuerung 26 seitens eines Fahrerassistenzsystems 32 zugeführt werden. Zur Betätigung der wenigstens einen Kupplungseinrichtung 28 ist ein Leistungsschalter 34 vorgesehen, der seinerseits über zugehörige Differentialsteuerleitungen 36 mit der Getriebesteuerung 26 kommuniziert.

Des Weiteren ist eine Überwachungseinrichtung 38 vorhanden, die das Einlegen der Fahrstufe seitens der Getriebesteuerung 26 ausschließlich dann freigibt, wenn diese aufgrund des Betätigungszustands eines ersten Fahrbedienelements 40 sowie eines zweiten Fahrbedienelements 42 auf das Vorliegen eines entsprechenden Fahrerwunsches schließt.

Beispielsgemäß handelt es sich bei dem ersten Fahrbedienelement 40 um einen zur Vorgabe einer Vorwärts- oder Rückwärtsfahrt vorgesehenen Fahrtrichtungshebel 44 sowie bei dem zweiten Fahrbedienelement 42 um ein Kupplungspedal 46 zur Betätigung der wenigstens einen Kupplungseinrichtung 28.

Die beiden Fahrbedienelemente 40, 42 erlauben einen eindeutigen Rückschluss dahingehend, ob der Fahrer des landwirtschaftlichen Traktors 14 beabsichtigt, durch Auswahl der Fahrtrichtung über den Fahrtrichtungshebel 44 sowie anschließendes Loslassen des Kupplungspedals 46 eine Vorwärts- bzw. Rückwärtsfahrt einzuleiten. Umgekehrt kann die Überwachungseinrichtung 38 auf das Vorliegen eines entsprechenden Fahrerwunsches schließen, wenn der Fahrtrichtungshebel 44 eine zur Durchführung einer Vorwärts- oder Rückwärtsfahrt vorgesehene Position einnimmt und/oder das Kupplungspedal 46 unbetätigt ist. Sobald sich der Fahrtrichtungshebel 44 in seiner Neutralposition befindet und/oder das Kupplungspedal 46 betätigt (niedergetreten) ist, wird indes eine Ansteuerung der wenigstens einen Kupplungseinrichtung 28 seitens der Getriebesteuerung 26 unterbunden bzw. unterbrochen. Denn ein Losfahren des landwirtschaftlichen Traktors 14 ist dann vom Fahrer ausdrücklich unerwünscht.

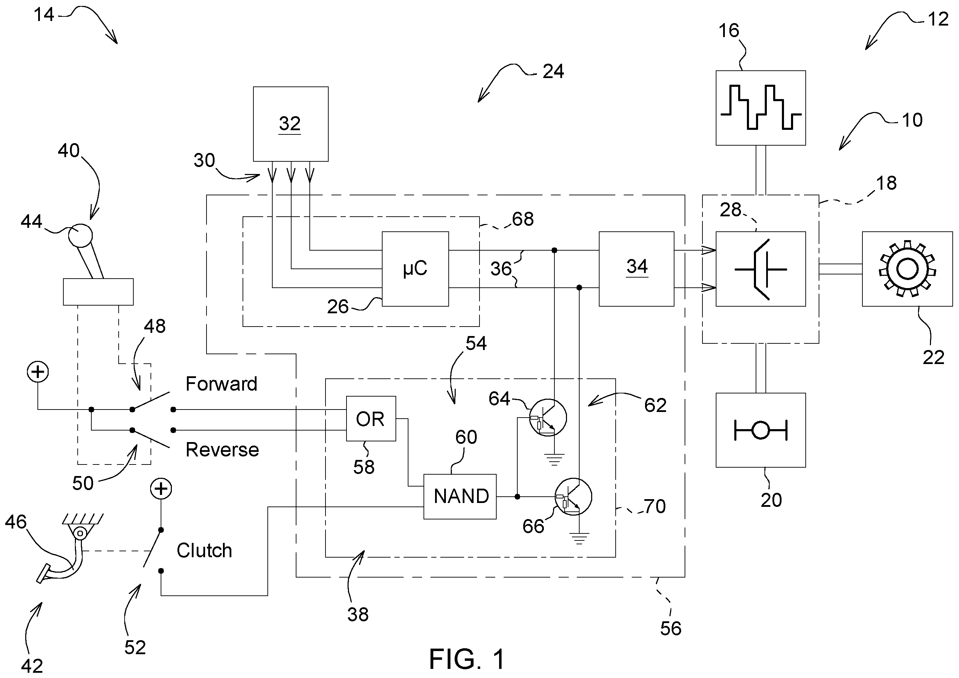

Die Position des Fahrtrichtungshebels 44 und/oder der Betätigungszustand des Kupplungspedals 46 wird mittels zugehöriger elektrischer Schaltelemente 48, 50, 52 erfasst und in Form entsprechender binärer Schaltzustandssignale "Forward", "Reverse" und "Clutch" an die Überwachungseinrichtung 38 übermittelt. Jedem der beiden Fahrbedienelemente 40, 42 ist ein separates elektrisches Schaltelement 48, 50, 52 zugeordnet, wobei dieses entgegen der Darstellung in Fig. 1 zur Erhöhung der Ausfallsicherheit zusätzlich redundant ausgeführt sein kann. Die elektrischen Schaltelemente 48, 50, 52 sind hierbei als berührungslose Sensoren oder aber als elektromechanische Schalter ausgebildet.

Die Überwachungseinrichtung 38 weist eine insbesondere in CMOS-Technologie hergestellte Halbleiterlogik 54 zur Auswertung der Schaltzustandssignale "Forward", "Reverse" und "Clutch" auf. Die Halbleiterlogik 54 ist entweder durch Programmierung eines FPGA-Bausteins oder aber eines Mikroprozessors als Bestandteil eines Getriebesteuergeräts 56 realisiert und umfasst ein OR-Gatter 58 zur Verknüpfung der von den elektrischen Schaltelementen 48, 50 des Fahrtrichtungshebels 44 kommenden Schaltzustandssignale "Forward" bzw. "Reverse" sowie ein mit dem Ausgang OUT_1 des OR-Gatters 58 eingangsseitig verbundenes NAND-Gatter 60, dem weiterhin die Schaltzustandssignale "Clutch" des elektrischen Schaltelements 52 des Kupplungspedals 46 zugeführt werden. Am Ausgang OUT_2 des NAND-Gatters 60 befinden sich wiederum zwei Halbleiterschalter 62 in Gestalt zugehöriger Transistoren 64, 66. Leiten die beiden Transistoren 64, 66 (wenn OUT_2 = 1), so schließen diese die Differentialsteuerleitungen 36 der Getriebesteuerung 26 gegen Masse kurz. Eine Betätigung der wenigstens einen Kupplungseinrichtung 28 zwecks Aufnahme der Fahrt ist dann ausgeschlossen.

Insgesamt ergibt sich die folgende Schaltzustands- bzw. Wahrheitstabelle:

| | | | | | | |
|---|---|---|---|---|---|---|
| Forward | 0 | 1 | 0 | 0 | 1 | 0 |
| Reverse | 0 | 0 | 1 | 0 | 0 | 1 |
| OUT_1 | 0 | 1 | 1 | 0 | 1 | 1 |
| Clutch | 0 | 0 | 0 | 1 | 1 | 1 |
| OUT_2 | 1 | 1 | 1 | 1 | 0 | 0 |

Hierbei sollen die folgenden Zuordnungen gelten:
Forward = 0 , falls Fahrtrichtungshebel 44 in Neutralposition
Reverse = 0 , falls Fahrtrichtungshebel 44 in Neutralposition
Clutch = 0 , falls Kupplungspedal 46 betätigt

Wie der Tabelle zu entnehmen ist, erfolgt eine Freigabe der Getriebesteuerung 26 ausschließlich in den durch die beiden letzten Spalten repräsentierten Konstellationen.

Zusammenfassend besteht die in Fig. 1 abgebildete Anordnung 24 somit aus zwei getrennten Steuerpfaden 68, 70. Einem ersten Steuerpfad 68, der der eigentlichen Getriebebetätigung einschließlich der Ansteuerung der wenigstens einen Kupplungseinrichtung 28 zum Einlegen der Fahrstufe dient, sowie einem zweiten Steuerpfad 70 als Kontrollinstanz zur Feststellung, ob die Aufnahme der Fahrt mit der tatsächlichen Absicht des Fahrers übereinstimmt.

Dies stellt sicher, dass der Fahrer stets die Kontrolle über den landwirtschaftlichen Traktor 14 behält und dieser sich nicht unvermittelt in Bewegung setzt.

## Patentansprüche

1. Anordnung zur Freigabe eines Fahrantriebs eines landwirtschaftlichen Traktors, umfassend eine Getriebesteuerung (26) zum Einlegen einer Fahrstufe durch Ansteuerung wenigstens einer zugehörigen Kupplungseinrichtung (28) sowie eine Überwachungseinrichtung (38), die das Einlegen der Fahrstufe seitens der Getriebesteuerung (26) ausschließlich dann freigibt, wenn diese aufgrund des Betätigungszustands wenigstens eines Fahrbedienelements (40, 42) auf das Vorliegen eines entsprechenden Fahrerwunsches schließt, **dadurch gekennzeichnet, dass** es sich bei dem wenigstens einen Fahrbedienelement (40, 42) um einen zur Vorgabe einer Vorwärts- oder Rückwärtsfahrt vorgesehenen Fahrtrichtungshebel (44) und/oder ein Kupplungspedal (46) zur Betätigung der wenigstens einen Kupplungseinrichtung (28) handelt.

2. Anordnung nach Anspruch 1, **dadurch gekennzeichnet, dass** die Überwachungseinrichtung (38) auf das Vorliegen eines entsprechenden Fahrerwunsches schließt, wenn der Fahrtrichtungshebel (44) eine zur Durchführung einer Vorwärts- oder Rückwärtsfahrt vorgesehene Position einnimmt und/oder das Kupplungspedal (46) unbetätigt ist.

3. Anordnung nach Anspruch 2, **dadurch gekennzeichnet, dass** die Position des Fahrtrichtungshebels (44) und/oder der Betätigungszustand des Kupplungspedals (46) mittels wenigstens eines elektrischen Schaltelements (48, 50, 52) erfasst und an die Überwachungseinrichtung (38) übermittelt wird.

4. Anordnung nach Anspruch 3, **dadurch gekennzeichnet, dass** die Überwachungseinrichtung (38) eine Halbleiterlogik (52) zur Auswertung von mittels des wenigstens einen Schaltelements (48, 50, 52) bereitgestellten Schaltzustandssignalen aufweist.

## Claims

1. Arrangement for releasing a travel drive of an agricultural tractor, comprising a transmission controller (26) for engaging a travel gear by activating at least one associated clutch device (28) and a monitoring device (38), which exclusively releases the engagement of the travel gear on the part of the transmission controller (26) when it concludes the presence of a corresponding driver intention on the basis of the actuating state of at least one travel operating element (40, 42), **characterized in that** the at least one travel operating element (40, 42) is a travel direction lever (44) provided to specify forward or reverse travel and/or a clutch pedal (46) for actuating the at least one clutch device (28).

2. Arrangement according to Claim 1, **characterized in that** the monitoring device (38) concludes the presence of a corresponding driver intention when the travel direction lever (44) assumes a position provided for carrying out forward or reverse travel and/or the clutch pedal (46) is not actuated.

3. Arrangement according to Claim 2, **characterized in that** the position of the travel direction lever (44) and/or the actuating state of the clutch pedal (46) is detected by means of a least one electrical switching element (48, 50, 52) and transmitted to the monitoring device (38).

4. Arrangement according to Claim 3, **characterized in that** the monitoring device (38) has a semiconductor logic (52) for evaluating switching state signals provided by means of the at least one switching element (48, 50, 52).

## Revendications

1. Ensemble de déblocage d'un système d'entraînement d'un tracteur agricole, comprenant une commande de transmission (26) destinée à engager un rapport de vitesse en pilotant au moins un dispositif d'embrayage (28) associé ainsi qu'un dispositif de surveillance (38), qui débloque l'engagement du rapport de vitesse du côté de la commande de transmission (26) exclusivement lorsque celle-ci déduit la présence d'un souhait correspondant du conducteur du fait de l'état d'actionnement d'au moins un élément de conduite (40, 42), **caractérisé en ce que** l'au moins un élément de conduite (40, 42) est un levier directionnel (44) prévu pour spécifier une marche avant ou une marche arrière et/ou une pédale d'embrayage (46) destinée à actionner l'au moins un dispositif d'embrayage (28).

2. Ensemble selon la revendication 1, **caractérisé en ce que** le dispositif de surveillance (38) déduit la présence d'un souhait correspondant du conducteur lorsque le levier directionnel (44) adopte une position prévue pour mettre en œuvre une marche avant ou une marche arrière et/ou que la pédale d'embrayage (46) n'est pas actionnée.

3. Ensemble selon la revendication 2, **caractérisé en ce que** la position du levier directionnel (44) et/ou l'état d'actionnement de la pédale d'embrayage (46) sont détectés au moyen d'au moins un élément de commutation (48, 50, 52) électrique et sont transmis au dispositif de surveillance (38).

4. Ensemble selon la revendication 3, **caractérisé en ce que** le dispositif de surveillance (38) comporte une logique à semi-conducteurs (52) destinée à évaluer des signaux d'état de commutation fournis au moyen de l'au moins un élément de commutation (48, 50, 52).
